# EUROPEAN PATENT APPLICATION

(11) **EP 0 790 731 A1**
(43) Date of publication of application: **20.08.1997**
(21) Application number: 96102299.3
(22) Date of filing: 15.02.1996
(51) Int. Cl.: H04M 1/72, H01M 2/10

(54) **Clasp structure for cellular phone and battery set**

(71) Applicant: Hsu, Cheng-Ming, Taipei (TW)
(72) Inventor: Hsu, Cheng-Ming, Taipei (TW)
(74) Representative: Viering, Jentschura & Partner

(57) **Abstract**

A clasp structure of cellular phone and its battery set is consisted by one cellular phone and one battery set. The battery set is comprised by one case and battery base. On the battery case has one clasp component which uses elasticity of spring component to buckle and to separate the cellular phone and the battery set. When the battery exhausted the power, only pushes the clasp component to make the battery set depart from the cellular phone; thus, not only easy to separate, but also the clasp component will not break. Users can save lots of money and easy operate that can increase the convenience to users.

## Description

The present invention relates to the clasp structure for cellular phone and its battery set which uses elasticity of clasp component and spring component to buckle and to separate the cellular phone and its battery set.

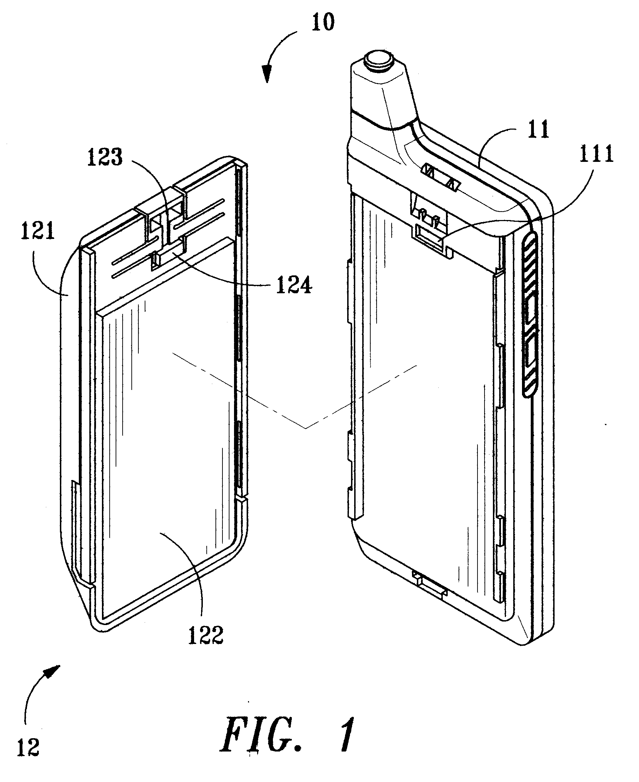

Please refers to Figure 1, a conventional cellular phone 10 is consisted by cellular phone 11 and its battery set 12 which is consisted by case 121 and battery base 122; then, the battery set is clasped with the cellular phone by the bottom trough 124 of clasp 123 on the top of battery base 122 to buckle with the clasp trough 111 of the cellular phone 11.

When the battery exhausted power, the battery set 12 need to be replaced. When separate the battery set 12 from the cellular phone 11, using the principle of leverage to make the bottom trough 124 of the clasp 123 to depart from the clasp trough 111 of the cellular phone 11. When remove the battery set, it requires to apply pressure on the top of the clasp 123 and to push the battery set 12 downward in order to make the battery 122 to depart from the cellular phone 11.

However, the clasp 123 and the battery 122 is one unit, and the join part is a rectangular support shaft. In order to separate the bottom trough 124 and the clasp trough 111, the support shaft of clasp 123 and the main body of the clasp trough 111 should have a gap in order to allow the support shaft of clasp 123 to become deformed because of torsion that will make the bottom trough 124 depart from the clasp trough 111.

However, when push the top of the clasp 123 downward, it is easy to stuff the gap followed the direction of the pressure and to make the support shaft of the clasp 123 is not easy to deform; thus the bottom trough 124 will not depart from the clasp trough 111. User has to apply larger pressure on the top of the clasp 123 and to push the battery 12 downward; thus it makes the join of clasp 123 and the battery 122 to have torsion, and to cause broken. User need to buy a new battery set that cause user lots troubles which is a big defect.

The present invention relates to the clasp structure of cellular phone and its battery set which is consisted by one cellular phone and one battery set which is consisted by one case and one battery base. On the battery case has one clasp which use elasticity of the clasp component and the spring component to buckle and to separate the cellular phone and the battery set. When the battery exhausted the power and the battery set 12 need to be replaced, only pushes the clasp to make the battery set depart from the cellular phone; thus not only easy to separate, but also the clasp will not break. User can save lots of money and easy operate that increase the convenience for users.

### IN THE DRAWINGS

The drawings disclose an illustrative embodiment of the present invention which serves to exemplify the various advantages and objects hereof, and are as follows:
- **Figure 1.**: is an exploded view of the conventional cellular phone.
- **Figure 2.**: is an perspective exploded view of the present invention.
- **Figure 3.**: is an perspective exploded view of the battery set of the present invention; and
- **Figure 4.**: is a perspective assembly of diagrammatic view of the case and the clasp of the present invention.

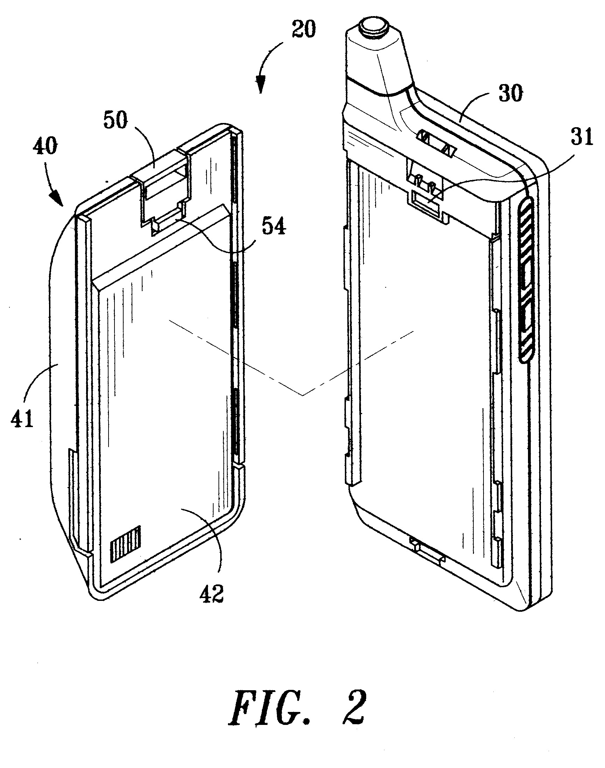

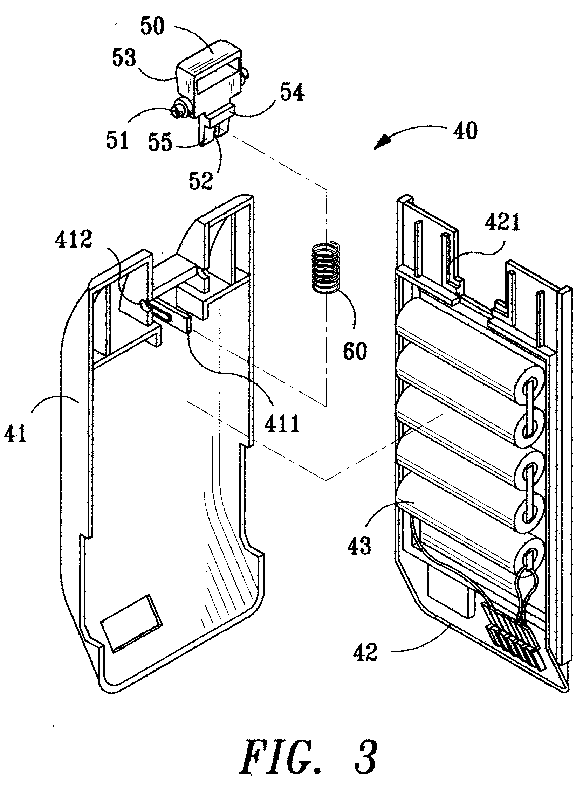

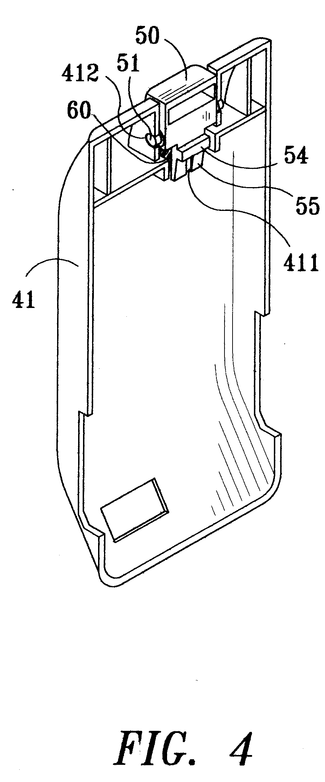

Please refer to Figure 2, Figure 3 and Figure 4, the cellular phone 20 is consisted by cellular phone 30 and battery set 40 which is comprised by one case 41 and one battery base 42. Then, there is a clasp 54 of the clasp component 50 on the top of the case 41 to buckle with the clasp trough 31 of the cellular phone, and combine as one cellular phone set.

The battery set 40 is comprised by one case 41 and one battery base 42. First should slip the spring component 60 on the protuberance 411 of the top of the case 41. Extended from the two side of the clasp component 50, there is one protuberance 51 which can put into the trough 412 of the case 41, and the bottom of the clasp component 50 has one retaining board 55 which has one notch 52. This notch 52 can cross through the protuberance 411 of the case 41 in order to make the two sides of the retaining board 55 blocks the spring component 60.

Battery 43 can be put inside the battery base 42; then, the battery base 42 can join together with the case 41 by combine the L shape trough 421 of battery base 42 with the trough hole 412 on the top of the case 41. Thus, the clasp component 50 can use the protuberance 51 as fulcrum, and use the elasticity of the spring component 60 to buckle the clasp 54 of the clasp component 50 with the clasp trough 31 of the cellular phone in order to hook up tightly for a cellular phone set. When you want to replace the battery 43, only push the pushing part 53 on the top of clasp component 50 slightly, and the cellular phone and battery set will separate.

According to the above combination and the stable fulcrum of the leverage, you only apply very small pressure on the pushing part 53 of the top of clasp component 50, and the clasp 54 will depart from the clasp trough 31 completely. Thus, you only apply very small pulling force to the battery base 42, and it is very easy to take off the battery without any damage. The present invention is not only save user's money and easy operation, but also increase a great convenience for users.

## Claims

1. A clasp structure for cellular phone and battery which is comprised one cellular phone and one battery set; the back side of cellular phone has one clasp trough and the battery set is consisted by one case and one battery base; the improvement are:
a case which has one protuberance ad one trough hole on the top of case;
a spring component which slip onto the protuberance of the case;
a clasp component which has one pushing part and the clasp on the top and the two sides of the clasp component extended one protuberance which can put into the trough hole of the case; on the bottom of the clasp component has one retaining board which has one notch to cross through the protuberance of the case and to make the two sides of the retaining board to block the spring component; and
a battery base which has one L shape trough on the top; this L shape trough combine with the trough hole on the top of the case; thus, the protuberance of the clasp component can be a fulcrum, and use the elasticity of spring component to achieve the function of clasp.
